# EUROPÄISCHE PATENTSCHRIFT

(11) **EP 0 819 582 B1**
(45) Veröffentlichungstag und Bekanntmachung des Hinweises auf die Patenterteilung: **24.10.2001**
(21) Anmeldenummer: 97111534.0
(22) Anmeldetag: 08.07.1997
(51) Int. Cl.: B60R 21/16

(54) **Gassack für ein Fahrzeuginsassen-Rückhaltesystem**
Air bag for a vehicle occupant restraint system
Sac gonflable pour un système de retenue des occupants d'un véhicule

(30) Priorität: 18.07.1996 DE 29612500 U
(43) Veröffentlichungstag der Anmeldung: 21.01.1998
(73) Patentinhaber: TRW Occupant Restraint Systems GmbH & Co. KG, 73551 Alfdorf (DE)
(72) Erfinder: Berger, Jürgen, 73557 Mutlangen (DE)
(74) Vertreter: Degwert, Hartmut, Dipl.-Phys.

(56) Entgegenhaltungen:
- GB-A- 1 473 794
- US-A- 4 805 930

## Beschreibung

Die Erfindung betrifft einen Gassack für ein Fahrzeuginsassen-Rückhaltesystem, der aus mindestens einem Gewebeteil besteht, dessen Ränder wenigstens entlang einem Teil ihrer Länge durch eine Naht verbunden sind. Insbesondere betrifft die Erfindung einen Gassack, bei dem Abströmöffnungen vorgesehen sind, aus denen bei entfaltetem Gassack ein Teil des zum Entfalten des Gassacks verwendeten Gases ausströmen kann.

Durch kontrolliertes Ausströmen des Gases aus dem entfalteten Gassack wird, abgestimmt auf die im Einzelfall vorliegende Unfallschwere und das Gewicht des Fahrzeuginsassens, eine optimale Rückhaltefunktion durch den entfalteten Gassack erzielt. Das Ausströmen des Gases aus dem Gassack kann im wesentlichen auf zwei Wegen erzielt werden: Zum einen können in der Wandung des Gassacks Ausströmöffnungen gebildet sein, die entweder von vornherein geöffnet sind oder durch den Druck im Inneren des Gassacks geöffnet werden, und zum anderen kann ein Ausströmen durch gasdurchlässige Bereiche des Gewebes selbst erzielt werden. Nachteilig bei in der Wandung gebildeten Ausströmöffnungen ist der hohe Fertigungsaufwand. Ferner lassen sich bei Ausströmöffnungen, die erst oberhalb eines bestimmten Drucks geöffnet werden, gewisse Schwankungen des Öffnungsdrucks nicht vermeiden.

Bei dem in der GB-A-1 473 794 gezeigten gattungsgemäßen Gassack wird ein Ausströmen des Gases dadurch erreicht, daß ein vorbestimmter Bereich einer Naht, die zwei Gewebeteile des Gassacks miteinander verbindet, bei Überschreiten eines vorbestimmten Drucks aufreißt, so daß dadurch eine Auströmöffnung gebildet wird.

Durch die Erfindung wird ein Gassack geschaffen, bei dem mit minimalem Aufwand Ausströmöffnungen gebildet sind, wenn sich der Gassack im entfalteten Zustand befindet. Gemäß der Erfindung ist vorgesehen, daß zwischen den beiden miteinander vernähten Gewebelagen jeweils zwischen den einzelnen Einstichstellen Ausströmöffnungen vorgesehen sind, durch die im entfalteten Zustand des Gassacks ein kontrolliertes Ausströmen von Gas erfolgt, wobei die Ausbildung der Ausströmöffnungen durch die Einstellung der Stichlänge sowie der Spannung des Fadens der Naht bedingt ist. Bei einem erfindungsgemäßen Gassack ist also weder eine gesondert auszubildende Ausströmöffnung in der Wandung des Gassacks noch ein spezielles gasdurchlässiges Gewebe notwendig, um ein kontrolliertes Ausströmen des Gases aus dem entfalteten Gassack zu erzielen. Die Ausströmöffnungen werden statt dessen zwischen den beiden miteinander vernähten Gewebelagen im Bereich der Naht gebildet, die ohnehin zum Verbinden dieser Gewebelagen notwendig ist. Durch eine geeignete Wahl der Parameter der Naht, insbesondere Stichlänge sowie Spannung des Fadens, kann das Ausströmverhalten des Gases durch die sich bildenden Ausströmöffnungen in der gewünschten Weise eingestellt werden.

Gemäß einer bevorzugten Ausführungsform der Erfindung ist vorgesehen, daß die Stichlänge der Naht kleiner als etwa 1 cm ist. Bei einer solchen Stichlänge ergibt sich eine guter Kompromiß zwischen einer ausreichenden Festigkeit der Naht und einem großen Gesamtquerschnitt der Ausströmöffnungen.

Die Erfindung wird nachfolgend unter Bezugnahme auf die beigefügte Zeichnung beschrieben. In dieser zeigen:
- Figur 1 einen schematischen Querschnitt durch einen erfindungsgemäßen Gassack;
- Figur 2 eine schematische Draufsicht auf den Gassack von Figur 1;
- Figur 3 schematisch und vergrößert einen Querschnitt durch eine bei dem in Figur 1 dargestellten Gassack verwendete Naht in einem drucklosen Zustand; und
- Figur 4 schematisch und vergrößert einen Querschnitt durch eine bei dem in Figur 1 dargestellten Gassack verwendete Naht in einem druckbeaufschlagten Zustand.
- Figur 5 schematisch und vergrößert einen Querschnitt durch eine bei dem in Figur 1 dargestellten Gassack verwendete andere Naht in einem drucklosen Zustand.

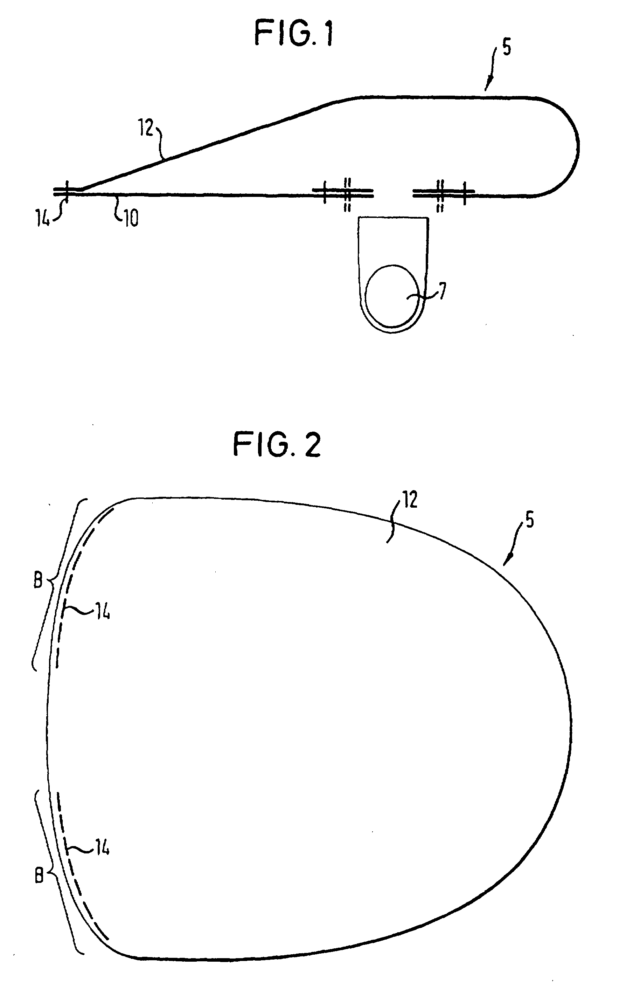

In den Figuren 1 und 2 ist schematisch ein erfindungsgemäßer Gassack 5 dargestellt, der mittels eines Gasgenerators 7 mit Druck beaufschlagt und dadurch entfaltet werden kann. An der bezüglich Figur 1 linken Seite sind zwei Gewebelagen 10, 12 (Figur 1) des Gassacks 10 miteinander durch eine Naht 14 verbunden. Wenn der Gassack 10 in ein Fahrzeug eingebaut ist, ist die Naht 14 von einem durch den Gassack zu schützenden Fahrzeuginsassen abgewandt, also beispielsweise der Windschutzscheibe oder dem Armaturenbrett des Fahrzeugs zugewandt.

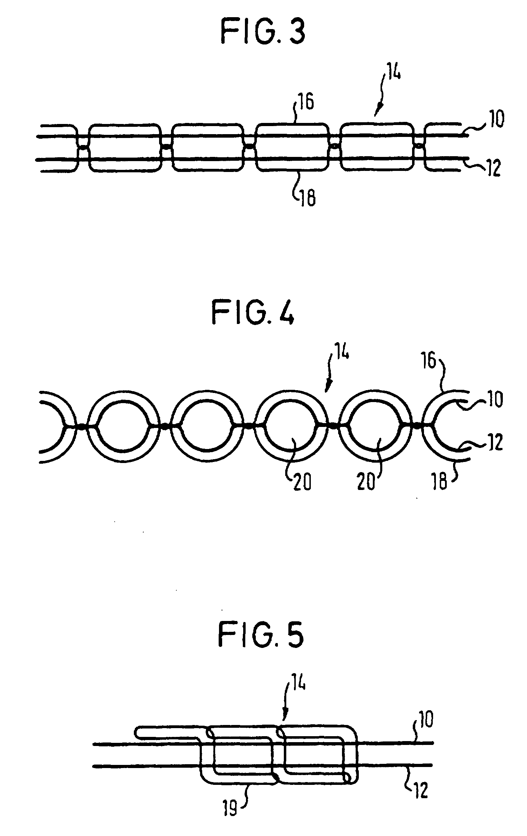

Die Naht 14 besteht aus einem Oberfaden 16 und einem Unterfaden 18 (Figuren 3 und 4). Die Stichlänge der Naht 14 sowie die Spannung des Ober- und des Unterfadens 16, 18 sind so eingestellt, daß bei entfaltetem Gassack aufgrund des in dessen Innenraum herrschenden Drucks zwischen den Einstichstellen der Naht 14 Ausströmöffnungen 20 entstehen, durch die ein Teil des sich im Innenraum des Gassacks befindenden Gases ausströmen kann (Figur 4). Bevorzugt wird eine Stichlänge von bis zu etwa einem Zentimeter. Bei dieser Stichlänge ergibt sich zum einen eine Naht mit einer für alle Anwendungsfälle ausreichenden Festigkeit und zum anderen ein ausreichender Gesamtausströmquerschnitt.

In Figur 2 sind die Bereiche B zu sehen, in denen die Naht 14 vorzugsweise verwendet wird. Diese Bereiche entsprechen den Randbereichen des Gassacks 10, die bei entfaltetem Gassack vergleichsweise gering belastet werden. Es ist auch möglich, die Naht 14 in dem zwischen den Bereichen B liegenden Abschnitt zu verwenden. In diesem Fall kann es vorteilhaft sein, die Stichlänge in diesem Abschnitt zu vermindern, um eine höhere Festigkeit der Naht 14 zu erzielen.

In Figur 5 ist die Naht 14 dargestellt, die im Gegensatz zur in den Figuren 3 und 4 dargestellten Variante aus einem einzigen Faden 19 gebildet ist. Auch bei der in Figur 5 dargestellten Naht kann der sich bei druckbeaufschlagter Naht ergebende Gesamtausströmquerschnitt durch die Spannung des Fadens und die Stichlänge beeinflußt werden.

Der Gesamtquerschnitt der Ausströmöffnungen 20 kann insbesondere durch die Stichlänge eingestellt werden. Bei einer kürzeren Stichlänge ergibt sich ein geringerer Gesamtausströmquerschnitt. Weiterhin kann der Gesamtausströmquerschnitt durch die Spannung des Fadens bzw. des Ober- und des Unterfadens eingestellt werden. Eine mit größerer Fadenspannung gebildete Naht 14 führt zu einem kleineren Gesamtausströmquerschnitt. Insgesamt ergibt sich gegenüber herkömmlichen Gassäcken eine besonders kostengünstige Fertigung, da weder ein besonderes Gewebe für den Gassack noch getrennte Herstellungsschritte für das Ausbilden der Ausströmöffnungen notwendig sind.

## Patentansprüche

1. Gassack für ein Fahrzeuginsassen-Rückhaltesystem, der aus mindestens einem Gewebeteil besteht, dessen Ränder wenigstens entlang einem Teil ihrer Länge durch eine Naht (14) verbunden sind, **dadurch gekennzeichnet, daß** zwischen den beiden miteinander vernähten Gewebelagen (10, 12) jeweils zwischen den einzelnen Einstichstellen Ausströmöffnungen (20) vorgesehen sind, durch die im entfalteten Zustand des Gassacks (5) ein kontrolliertes Ausströmen von Gas erfolgt, wobei die Ausbildung der Ausströmöffnungen (20) durch die Einstellung der Stichlänge sowie der Spannung des Fadens der Naht (14) bedingt ist.

2. Gassack nach Anspruch 1, **dadurch gekennzeichnet, daß** die Stichlänge der Naht (14) variabel ist.

3. Gassack nach einem der vorhergehenden Ansprüche, **dadurch gekennzeichnet, daß** die Stichlänge der Naht (14) kleiner als etwa 1 cm ist.

4. Gassack nach einem der vorhergehenden Ansprüche, **dadurch gekennzeichnet, daß** die Naht (14) aus einem Oberfaden (16) und einem Unterfaden (18) besteht.

5. Gassack nach einem der Ansprüche 1 bis 3, **dadurch gekennzeichnet, daß** die Naht aus einem einzigen Faden (19) besteht.

## Claims

1. A gas bag for a vehicle occupant restraint system, the gas bag consisting of at least one fabric part the edges of which are connected along at least part of their length by a seam (14), **characterized in that** between the two sewn together fabric plies (10, 12) outflow openings (20) are provided between the individual stitch places, through which openings a controlled discharge of gas takes place in the unfolded state of the gas bag (5), the design of the outflow openings (20) being conditioned by the adjustment of the stitch length as well as of the tension of the thread of the seam (14).

2. The gas bag as claimed in claim 1, **characterized in that** the stitch length of the seam (14) is variable.

3. The gas bag as claimed in any of the preceding claims, **characterized in that** the stitch length of the seam (14) is less than approximately one centimeter.

4. The gas bag as claimed in any of the preceding claims, **characterized in that** the seam (14) consists of an upper thread (16) and an under thread (18).

5. The gas bag as claimed in any of the claims 1 to 3, **characterized in that** the seam consists of a single thread (19).

## Revendications

1. Coussin à gaz pour un système de retenue de passagers d'un véhicule, constitué par au moins une partie de tissu dont les bords sont reliés au moins le long d'une partie de leur longueur par une couture (14), **caractérisé en ce qu'**entre les deux couches de tissus (10, 12) cousues l'une à l'autre, entre les points de piqûre individuels respectifs, sont prévus des orifices de sortie (20) à travers lesquels du gaz s'écoule de manière contrôlée lorsque le coussin à gaz (5) est à l'état déplié, la formation des orifices d'écoulement (20) étant conditionnée par le réglage de la longueur de piqûre ainsi que par la tension du fil de la couture (14).

2. Coussin à gaz selon la revendication 1, **caractérisé en ce que** la longueur de piqûre de la couture (14) est variable.

3. Coussin à gaz selon l'une des revendications précédentes, **caractérisé en ce que** la longueur de piqûre de la couture (14) est inférieure à approximativement 1 cm.

4. Coussin à gaz selon l'une des revendications précédentes, **caractérisé en ce que** la couture (14) est constituée par un fil supérieur (16) et un fil inférieur (18).

5. Coussin à gaz selon l'une des revendications 1 à 3, **caractérisé en ce que** la couture est constituée par un seul fil (19).
